# EUROPÄISCHE PATENTSCHRIFT

(11) **EP 2 948 738 B1**
(45) Veröffentlichungstag und Bekanntmachung des Hinweises auf die Patenterteilung: **01.11.2017**
(21) Anmeldenummer: 14701676.0
(22) Anmeldetag: 24.01.2014
(51) Int. Cl.: G01C 21/36, G01C 21/32

(54) **VERFAHREN UND NAVIGATIONSVORRICHTUNG ZUM BEREITSTELLEN VON INFORMATIONEN ÜBER EINEN PARKPLATZ**
METHOD AND NAVIGATION APPARATUS FOR MAKING AVAILABLE INFORMATION ABOUT A PARKING LOCATION
PROCÉCÉ ET DISPOSITIF DE NAVIGATION POUR METTRE À DISPOSITION DES INFORMATIONS PAR RAPPORT À UNE PLACE POUR GARER

(30) Priorität: 26.01.2013 DE 102013001308
(43) Veröffentlichungstag der Anmeldung: 02.12.2015
(73) Patentinhaber: Audi AG, 85045 Ingolstadt (DE)
(72) Erfinder: STADLER, Michael, 85110 Arnsberg (DE)
(74) Vertreter: Bauer, Dominik Michael
(86) Internationale Anmeldenummer: PCT/EP2014/000182
(87) Internationale Veröffentlichungsnummer: WO 2014/114456

(56) Entgegenhaltungen:
- EP-A2- 1 006 503
- WO-A1-2010/081547
- WO-A1-2011/138035
- WO-A1-2012/019628
- DE-A1-102009 027 543
- DE-A1-102009 028 024

## Beschreibung

Die Erfindung betrifft ein Verfahren zum Bereitstellen von Informationen über einen Parkplatz. Zu der Erfindung gehört auch eine Navigationsvorrichtung, mittels welcher diese Informationen für einen Fahrer eines Kraftwagens verfügbar gemacht werden, sowie einen Kraftwagen, welcher eine entsprechende Navigationsvorrichtung aufweist.

Ein Verfahren zum Bereitstellen von Informationen über einen Parkplatz ist bereits aus der DE 10 2009 027 543 A1 bekannt. Bei dem in dieser Druckschrift beschriebenen Verfahren wird für einen Parkplatz dessen Beschattung durch ein benachbartes Gebäude bei vorgegebenem Sonnenstand berechnet. Hierzu wird eine trigonometrische Formel oder ein Raytracing-Verfahren verwendet. Der Schattenverlauf während des Tagesverlaufs ergibt sich dann aus der Aneinanderreihung von Schattenwürfen zu verschiedenen Tageszeiten.

Nachteilig bei diesem Verfahren ist, dass sehr viele Informationen über die Silhouetten der um einen Parkplatz herum befindlichen Gebäude bekannt sein müssen, um eine zuverlässige Schätzung des Schattenwurfes berechnen zu können. Zudem lassen sich über die Jahreszeit veränderliche Bedingungen, wie beispielsweise der Schatten, den Bäume mit ihrem Laub werfen, nur schwer berücksichtigen.

In dem Dokument DE 10 2009 028 024 A1 ist ein Parkleitsystem beschrieben, welches Positionen von freien Parkplätzen auffindet, indem Fahrzeuge lokalisiert werden, die gerade einen Parkplatz freimachen. Diese Fahrzeuge können auch ihren Fahrzeugtyp und ihre Fahrzeuglänge mitteilen, um für parkplatzsuchende Fahrzeuge ermitteln zu können, ob der Parkplatz überhaupt geeignet ist.

In dem Dokument WO 2010/081547 A1 ist ein Navigationsgerät beschrieben, welches erkennt, ob es sich bei Flächen in einer Karte um potenzielle Parkplätze handelt. Wird eine Fläche als Parkplatz erkannt, kann zusätzlich ermittelt werden, ob für diesen Parkplatz eine Parkgebühr zu entrichten ist oder ob der Parkplatz nur für bestimmte Nutzer freigegeben ist.

Im Dokument WO 2012/019628 A1 ist ein System zur Erkennung von Parkplätzen und zur Kategorisierung von erkannten Parkplätzen beschrieben. Die Kategorisierung kann beispielsweise die Größe des Parkplatzes oder die Nutzungshäufigkeit betreffen.

Im Dokument WO 2011/138035 A1 ist ein Verfahren zum Detektieren von freiem Parkraum und Mitteilen des freien Parkraums an ein parkplatzsuchendes Fahrzeug beschrieben. Der Fahrer des parkplatzsuchenden Fahrzeugs kann fahrzeugspezifische und nutzerspezifische Vorgaben für die Parkplatzsuche, die die Fahrzeugart, Fahrzeuggröße oder eine Nutzeridentität betreffen.

In dem Dokument EP 1 006 503 A2 ist eine Parkraumerfassung beschrieben, die auf statistischer Ebene für unterschiedliche Stadtbezirke eine Belegungsquote ermittelt. Die Statistiken können für unterschiedliche Verkehrsumfelder ermittelt werden, beispielsweise Großraumveranstaltungen, Wetter und Wochentag, um eine Prognose des freien Parkraums für zukünftige Zeitpunkte zu erhalten.

Der Erfindung liegt die Aufgabe zugrunde, über einen oder mehrere Parkplätze jeweils verlässliche Informationen zu übermitteln und einem Fahrer eines Fahrzeugs bereit zu stellen.

Die Aufgabe wird durch ein Verfahren gemäß Patentanspruch 1, eine Navigationsvorrichtung gemäß Patentanspruch 12 sowie einen Kraftwagen gemäß Patentanspruch 13 gelöst. Vorteilhafte Weiterbildungen der Erfindung sind durch die Unteransprüche gegeben.

Das erfindungsgemäße Verfahren ermöglicht es, anhand von empirischen Merkmalsdaten eine zuverlässige Aussage darüber zu ermitteln, ob ein Parkplatz für ein Fahrzeug geeignet ist, wenn ein Fahrer das Fahrzeug zu einem bestimmten Zeitpunkt auf dem Parkplatz abstellen möchte. Hierzu werden gemäß dem Verfahren diese Merkmalsdaten des Parkplatzes zunächst durch eine Erfassungseinrichtung erfasst. Hierbei ist man sehr flexibel, d. h. die Merkmalsdaten können sehr unterschiedliche Merkmale oder Eigenschaften eines Parkplatzes beschreiben. So kann vorgesehen sein, dass die Merkmalsdaten beispielsweise einen Umwelteinfluss beschreiben, der auf zumindest ein zuvor auf dem Parkplatz geparktes Fahrzeug eingewirkt hat, also beispielsweise eine Sonneneinstrahlung oder auch Raureif. Bei den Merkmalsdaten kann es sich aber auch um Daten zu einem Ereignis handeln, das sich an dem Parkplatz ereignet. Beispielsweise kann hier durch die Merkmalsdaten angegeben werden, ob es bereits zu Vandalismus in der Nähe des Parkplatzes gekommen ist. Durch die Merkmalsdaten kann aber auch eine geografische Lage des Parkplatzes beschrieben werden, also ob der Parkplatz beispielsweise überdacht ist. Je nach Typ der Merkmalsdaten ist dann die Erfassungseinrichtung entsprechend technisch auszugestalten.

Die durch die Erfassungseinrichtung erfassten Merkmalsdaten werden nach dem erfindungsgemäßen Verfahren durch eine fahrzeugexterne Informationseinrichtung gespeichert, also beispielsweise eine zentrale Datenbank, die z.B. Bestandteil eines Servers des Internets sein kann. Die Informationseinrichtung speichert so die Merkmalsdaten vieler Parkplätze, die durch eine Vielzahl von Erfassungseinrichtungen erfasst und zur Informationseinrichtung übertragen werden. In einem weiteren Schritt des erfindungsgemäßen Verfahrens werden die Merkmalsdaten durch die Informationseinrichtung dann an eine Navigationseinrichtung übertragen, wie sie von einem Fahrer eines bestimmten Fahrzeugs dazu genutzt werden kann, um einen Parkplatz für sein Fahrzeug zu suchen. Eine solche Navigationsvorrichtung kann z.B. ein mobiles Navigationsgerät, ein Smartphone oder ein Navigations- oder Infotainmentsystem des Fahrzeugs selbst sein. Bei der Navigationsvorrichtung kann es sich aber auch beispielsweise um eine Anordnung aus mehreren, miteinander kommunizierenden Geräten handeln, beispielsweise einem Infotainmentsystem oder einem Navigationsgerät in einem Fahrzeug sowie einem fahrzeugexternen Server, der beispielsweise über eine Internetverbindung mit dem Navigationsgerät bzw. dem Infotainmentsystem in Verbindung steht.

Das erfindungsgemäße Verfahren weist den Vorteil auf, dass dem Fahrer bei der Suche nach einem Parkplatz nun empirische Merkmalsdaten zu Parkplätzen zur Verfügung stehen, anhand welchen er selbst entscheiden kann, ob ein bestimmter Parkplatz, der gerade frei ist und in dessen Nähe sich das Fahrzeug befindet, auch zum Parken geeignet ist. Geht beispielsweise aus den Merkmalsdaten hervor, dass in einer halben Stunde die Sonneneinstrahlung auf diesem Parkplatz sehr intensiv sein wird, so kann dies den Fahrer eventuell davon abhalten, diesen Parkplatz zu wählen, da ansonsten sein Fahrzeug zu sehr aufgeheizt wird. Insbesondere wenn zu mehreren Parkplätzen entsprechende Merkmalsdaten erfasst und durch die Informationseinrichtung gespeichert und der Navigationsvorrichtung zur Verfügung gestellt werden, kann der Fahrer anhand der Merkmalsdaten auswählen, welcher Parkplatz für ihn am günstigsten ist. Der Fahrer kann dann also Priorisieren. Eine andere Ausführungsform des Verfahren nimmt dem Fahrer aus diese Entscheidung ab. Hier wird in automatisierter Form durch die Navigationsvorrichtung selbst der günstigste Parkplatz ausgewählt und als Navigationsziel festgelegt. Das erfindungsgemäße Verfahren sieht vor, dass die Merkmalsdaten zusätzlich eine Zeitangabe umfassen, insbesondere eine Jahreszeit und/oder eine Tageszeit. Wird dann durch die Merkmalsdaten ein bestimmter Umwelteinfluss beschrieben, der zuvor auf ein Fahrzeug auf diesem Parkplatz einwirkte, so kann anhand der Zeitangabe durch den Fahrer oder die Navigationsvorrichtung beurteilt werden, ob dieser Umwelteinfluss auch momentan zu erwarten ist, wenn das Fahrzeug auf dem Parkplatz abgestellt wird. Beispielsweise ist auf einem Parkplatz unter Laubbäumen mit einer Sonneneinstrahlung nur im Winter zu rechnen, wenn die Bäume ihr Laub abgeworfen haben. Im Sommer ist der Parkplatz schattig. Wird durch die Merkmalsdaten ein Ereignis beschrieben, so kann anhand der Zeitangabe ebenfalls abgeschätzt werden, ob dieses Ereignis sich noch einmal wiederholen wird, während der Fahrer sein Fahrzeug ebenfalls auf dem Parkplatz abstellt. Ist es beispielsweise bisher nur nachts vorgekommen, dass ein Fahrzeug auf dem Parkplatz beschädigt wurde, so kann ein Fahrer sein Fahrzeug dort wohl bedenkenlos für fünf Minuten abstellen, wenn dies tagsüber geschieht.

Im Zusammenhang mit der Erfassung eines Umwelteinflusses ergeben sich zweckmäßige Ausführungsformen des Verfahrens neben der beschriebenen Erfassung einer Sonneneinstrahlung auch durch die Erfassung der folgenden Umwelteinflüsse: Es kann ein Vereisungsgrad einer Außenfläche des Fahrzeugs erfasst werden, also ein Maß dafür, wie sehr im Winter eine Windschutzscheibe des Fahrzeugs mit Eis bedeckt ist. Im Zusammenhang mit der Erfassung eines bestimmten Ereignisses sieht eine Ausführungsform des Verfahrens vor, dass erfasst wird, wie gut die Straße besucht ist, an welcher sich der Parkplatz befindet. Ein weiteres, aussagekräftiges Ereignis ist, wann der Parkplatz verfügbar war. Ebenfalls wichtig zu wissen kann es sein, ob der Parkplatz nachts beleuchtet ist. Im Zusammenhang mit der Erfassung einer geografischen Lage ergibt sich eine vorteilhafte Ausführungsform des Verfahrens, nach welcher erfasst wird, ob der Parkplatz überdacht ist. Ebenfalls eine wichtige Information ist, wie lang ein Fußweg bis zu einem vorbestimmten Ort ist, der fußläufig vom Parkplatz aus erreichbar ist. Möchte also jemand beispielsweise eine Veranstaltung, wie eine Theateraufführung, besuchen, kann es für ihn interessant sein, über einen Parkplatz zu erfahren, wie weit man von dort aus noch zu Fuß bis zu dem Veranstaltungsort gehen muss.

Wie bereits ausgeführt kann die Erfassungseinrichtung auf vielen unterschiedlichen Weisen realisiert sein. So ergeben sich mehrere Ausführungsformen des Verfahrens dadurch, dass die Erfassungseinrichtung eine oder mehrere der folgenden Einrichtungen eines oder mehrerer Vorgängerfahrzeuge umfasst, die auf dem Parkplatz zuvor geparkt waren. Von einem solchen Vorgängerfahrzeug können eine Fotosensorik, ein Thermometer, eine Luftfeuchtigkeitsmesseinrichtung und/oder eine Kamera genutzt werden, um auch die Sonneneinstrahlung zu messen oder die Vereisung von Scheiben. Letzteres kann beispielsweise aus einer Kombination von Messwerten eines Temperaturwerts, einer Luftfeuchtigkeitsmessung und eines Kamerabildes gebildet ermittelt werden. Eine weitere Ausführungsform des Verfahrens sieht vor, mittels einer Navigationseinrichtung eines Vorgängerfahrzeugs Leerfahrten bei einer Fahrzeugsuche zu ermitteln. Erkennt die Navigationseinrichtung beispielsweise, dass der Fahrer mehrfach an mehreren Parkplätzen vorbeifährt und hierbei immer wieder an diesen Parkplätzen vorbeikommt ("um den Block fahren"), so ist dies offensichtlich eine Leerfahrt. Die Navigationsvorrichtung kann dann zu all diesen Parkplätzen jeweils vermerken, dass sie zu einer bestimmten Uhrzeit offensichtlich besetzt waren. Im Zusammenhang mit dem Grad einer Vereisung und auch im Zusammenhang mit einer Erhitzung des Fahrzeuginnenraumes durch Sonneneinstrahlung kann eine Beobachtungseinrichtung zum Messen der Zeit bereitgestellt werden, die ein Fahrer eines Vorgängerfahrzeugs zum Vorbereiten einer Fahrt nach dem Parken auf dem Parkplatz benötigte: Muss also ein Fahrer das Vorgängerfahrzeug aufschließen und dann zunächst Eis von der Windschutzscheibe kratzen, um dann losfahren zu können, kann aus dem Zeitabstand zwischen dem Aufschließen und dem Losfahren rückgeschlossen werden, dass der Fahrer offensichtlich das Fahrzeug zunächst für die Fahrt vorbereiten musste, weil es vereist war. Eine solche Beobachtereinrichtung kann z.B. in Form eines Programmmoduls eines Infotainmentsystems bereitgestellt sein und auch dazu ausgestaltet sein zu ermitteln, ob ein Vorgängerfahrzeug verschneit war, mit Laub zugedeckt war, die Scheiben verschmutzt waren oder der Fahrzeuginnenraum derart aufgeheizt war, dass zunächst das Lüften notwendig war.

Neben der beschriebenen sensorischen Erfassung der Merkmalsdaten sehen weitere Ausführungsformen des erfindungsgemäßen Verfahrens vor, auf bereits aufbereitete Informationen zurückzugreifen. Eine Ausführungsform des Verfahrens sieht hier vor, von einem Fahrer eines Vorgängerfahrzeugs, das auf einem bestimmten Parkplatz geparkt gewesen ist, mittels einer Eingabevorrichtung Eingabedaten zu empfangen, über welche der Fahrer eine Bewertung des Parkplatzes abgibt, also z.B. die Bemerkung: "Der Wagen stand in der prallen Sonne." Diese Bewertung ist in der Regel aussagekräftiger als ein über Sensordaten ermitteltes Merkmal. Eine andere Ausführungsform des Verfahrens greift auf historische Daten über Ereignisse betreffend Vandalismus auf dem Parkplatz zu, die in einer Datenbank gespeichert sind. Eine weitere Ausführungsform des Verfahrens sieht das Empfangen von Veranstaltungsdaten aus einer Datenbank über bevorstehende Veranstaltungen in einem vorbestimmten Umkreis um den Parkplatz vor. So kann beispielsweise zu einem Parkplatz vorausgesagt werden, ob an diesem Abend eine Menge Fußballfans vorbeikommen werden, da in der Nähe ein Fußballspiel veranstaltet werden wird. Dies kann ein Hinweis darauf sein, dass mit einem besonders hohen Grad an Verdreckung durch weggeworfene Abfälle zu rechnen sein kann.

Bei der Informationseinrichtung kann es sich, wie bereits ausgeführt, um eine Datenbank handeln. Hier werden dann die Merkmalsdaten eines jeden Parkplatzes unter einer entsprechenden Identifikationsnummer des jeweiligen Parkplatzes abgespeichert. Dies ermöglicht einen systematischen Zugriff auf die Merkmalsdaten zu einem bestimmten Parkplatz.

Ob bestimmte Merkmalsdaten für einen Fahrer eines Fahrzeugs relevant sind, ist insbesondere auch davon abhängig, wann er sein Fahrzeug auf dem Parkplatz abstellen möchte. Möchte er beispielsweise über Nacht parken, so sind Angaben über die Sonneneinstrahlung irrelevant. Um hier eine effiziente Zusammenstellung von Informationen zu einem bestimmten Parkplatz zu erhalten, sieht das Verfahren vor, dass durch die Navigationsvorrichtung von einem Fahrer, der einen Parkplatz für sein Fahrzeug sucht, eine Eingabe mit Zeitangabedaten empfangen wird, d.h. der Fahrer gibt z.B. per Tastatur oder Sprachbedienung den voraussichtlichen Parkzeitraum an, also von wann bis wann. Diese Zeitangabedaten geben an, für welchen Zeitraum das Fahrzeug auf dem Parkplatz voraussichtlich geparkt wird und ermöglichen eine gezielte Zusammenstellung aussagekräftiger Merkmalsdaten zu den in Frage kommenden Parkplätzen.

Wie ebenfalls bereits ausgeführt, werden bevorzugt zu mehreren Parkplätzen jeweilige Merkmalsdaten durch die Informationseinrichtung gespeichert. Um es nun einem Fahrer zu vereinfachen, sich für einen Parkplatz zu entscheiden, wird bevorzugt durch die jeweilige Navigationsvorrichtung zu jedem Parkplatz eine Bewertung dazu ermittelt, wie gut der jeweilige Parkplatz zum Parken seines Fahrzeugs geeignet ist. Unter einer solchen Bewertung ist im Zusammenhang mit der Erfindung eine Zuordnung eines Werts oder eines Merkmals zu jedem Parkplatz zu verstehen, so dass sich eine Priorisierung oder Rangordnung zwischen den Parkplätzen ergibt. So können beispielsweise Noten für die einzelnen Parkplätze ermittelt werden oder auch Empfehlungen. Es kann aber auch beispielsweise die voraussichtliche Fahrgastraumtemperatur angezeigt werden, die sich durch Sonneneinstrahlung ergeben könnte, oder eine Angabe, wie lange voraussichtlich eine Fahrvorbereitung dauern wird, nachdem auf dem Parkplatz geparkt wurde, weil etwa Eis von der Windschutzscheibe zu kratzen ist. Die Bewertung weist den Vorteil auf, dass sich der Fahrer nicht mit in den Merkmalsdaten selbst enthaltenen Details beschäftigen muss. Die Bewertung fasst alle Merkmalsdaten zusammen.

Durch die Merkmalsdaten selbst können nämlich insbesondere auch mehrere Aspekte eines Parkplatzes beschrieben sein. Im Folgenden wird jeder dieser Aspekte als sogenannter Parameter des Parkplatzes bezeichnet. Mit anderen Worten können die Merkmalsdaten jedes Parkplatzes jeweils mehrere Parameter eines Parkplatzes umfassen. Nun ist nicht jeder Parameter für jedes Fahrzeug gleich relevant. Weist ein Fahrzeug beispielsweise eine Standheizung auf, so ist die Gefahr einer Vereisung sehr gering und dieser Parameter muss daher bei der Bewertung eines Parkplatzes nur in Extremfällen berücksichtigt werden, wenn z.B. besonders niedrige Temperaturen zu erwarten sind. Entsprechend sieht eine Ausführungsform des Verfahrens vor, dass durch die Navigationsvorrichtung zum Ermitteln der Bewertung jedes Parkplatzes jeweils die Parameter mit einer für jeden Parameter einstellbaren Gewichtung beaufschlagt werden und dann die gewichteten Parameter zu der Bewertung des jeweiligen Parkplatzes kombiniert werden. Hierdurch ergibt sich Vorteil, dass für jedes Fahrzeug dem jeweiligen Fahrer individuell nach seinen Bedürfnissen geeignete Bewertungen der Parkplätze angeboten werden.

Auch Wetterinformationen können eine entscheidende Rolle spielen, falls man nach den Kriterien Sonneneinstrahlung oder Vereisungsgrad eine Rangordnung zwischen den Parkplätzen herstellen will, also die Parkplätze bewerten will. So ist bei einer erwarteten Außentemperatur über der 0°-Grenze eine plötzliche Vereisung des Fahrzeugs eher unwahrscheinlich. Ebenso freut man sich im Winter eher über die Sonneneinstrahlung, da dadurch das Fahrzeug komfortabel und ökologisch aufgeheizt wird. Hierzu sieht eine Ausführungsform des Verfahrens vor, dass die Bewertung eines Parkplatzes durch die Navigationsvorrichtung in Abhängigkeit von Wetterdaten und/oder einer Jahreszeit und/oder einer Außentemperatur und/oder einer Ausstattung des suchenden Fahrzeugs (beispielsweise Standheizung ja oder nein) ermittelt wird.

Anhand der für die einzelnen Parkplätze ermittelten Bewertungen kann nun der Fahrer während einer Suche nach einem Parkplatz für sein Fahrzeug unterstützt werden, indem durch die Navigationsvorrichtung dem Fahrer zu jedem Parkplatz die entsprechende Bewertung angezeigt wird. Dies geschieht gemäß einer Ausführungsform des Verfahrens durch ein Navigationsgerät oder Infotainmentsystem des Fahrzeugs, durch welches in einem Straßenplan oder einer Straßenkarte die Parkplätze mit den entsprechenden Bewertungen angezeigt werden. Eine andere Ausführungsform des Verfahrens sieht vor, dass durch eine Projektionsvorrichtung dem Fahrer des Fahrzeugs die Bewertungen über eine Fensterscheibe angezeigt werden. Der Fahrer sieht dann also beim Blick aus dem Fahrzeug heraus direkt zu den einzelnen Parkplätzen die Bewertung in seinem Sichtfeld. Das Einblenden der Bewertung kann beispielsweise durch eine Head-up-Display-Einheit, wie sie an sich bekannt ist, oder auch durch gezieltes Auskoppeln von Licht aus der Fensterscheibe erfolgen, wobei dann das Licht entsprechend an einem Rand der Fensterscheibe einzukoppeln ist. Die Fensterscheibe wird dabei also als Lichtleiter genutzt.

Die ermittelte Bewertung kann auch in einer automatisierten Form weiter verarbeitet werden. So kann gemäß einer Ausführungsform des Verfahrens durch die Navigationsvorrichtung in einer vorbestimmten Umgebung um einen vorgegebenen Navigationszielort auf Grundlage der von der Informationseinrichtung empfangenen Merkmalsdaten ein Parkplatz ausgewählt werden und eine Navigationsroute zu dem ausgewählten Parkplatz ermittelt werden. "Auf der Grundlage" bedeutet hierbei, dass direkt anhand der Merkmalsdaten oder einer daraus abgeleiteten Bewertung gesucht wird. Durch das Ermitteln der Navigationsroute zu dem ausgewählten Parkplatz wird der Fahrer in vorteilhafter Weise nicht zu seinem eigentlichen Zielort, sondern bereits zu einem geeigneten Parkplatz in der Nähe des Zielorts navigiert.

Um dem Fahrer hier in vorteilhafter Weise Kontrolle über die Wahl des Parkplatzes zu geben, sieht eine Weiterbildung des Verfahrens vor, dass durch die Navigationseinrichtung von dem Fahrer oder einem anderen Benutzer eine entsprechende Eingabe empfangen wird, welches Mindestanforderungskriterium ein Parkplatz erfüllen muss, um bei der Auswahl der möglichen Parkplätze berücksichtigt zu werden.

Bei der ebenfalls zur Erfindung gehörenden Navigationsvorrichtung gibt es grundsätzlich zwei Ausführungsformen, die auch miteinander kombiniert sein können. Wie bereits ausgeführt empfängt die Navigationsvorrichtung von einer Informationseinrichtung, beispielsweise einem zentralen Datenbankserver, Merkmalsdaten zu mehreren Parkplätzen. Die Navigationsvorrichtung kann dann zum einen dazu ausgelegt sein, zu jedem Parkplatz die Merkmalsdaten und/oder eine daraus abgeleitete Bewertung des Parkplatzes in einer Karte und/oder mittels einer Projektionsvorrichtung über eine Fensterscheibe eines Kraftwagens anzuzeigen. Zusätzlich oder alternativ dazu kann bei der Navigationsvorrichtung aber auch vorgesehen sein, in einer vorbestimmten Umgebung um einen vorgegebenen Navigationszielort auf der Grundlage der empfangenen Merkmalsdaten einen Parkplatz anhand einer Navigationsdatenbank auszuwählen und eine Navigationsroute zu dem ausgewählten Parkplatz zu ermitteln.

Zu der Erfindung gehören auch Weiterbildungen der erfindungsgemäßen Navigationsvorrichtung, welche Merkmale aufweisen, die bereits im Zusammenhang mit den entsprechenden Weiterbildungen des erfindungsgemäßen Verfahrens beschrieben wurden. Aus diesem Grund sind die entsprechenden Weiterbildungen der erfindungsgemäßen Navigationsvorrichtung hier nicht noch einmal beschrieben.

Der ebenfalls zur Erfindung gehörige Kraftwagen zeichnet sich dadurch aus, dass er eine Ausführungsform der erfindungsgemäßen Navigationsvorrichtung aufweist. Zusätzlich oder alternativ dazu kann der erfindungsgemäße Kraftwagen auch eine Ausführungsform der beschriebenen Erfassungseinrichtung aufweisen, mittels welcher Merkmalsdaten zu einem Parkplatz, auf welchem der Parkplatz geparkt ist und/oder geparkt war, erfasst werden können. Diese Ausführungsform des erfindungsgemäßen Kraftwagens weist den Vorteil auf, dass sie zum Akkumulieren von Merkmalsdaten zu unterschiedlichen Parkplätzen genutzt werden kann.

Die Erfindung ist im Folgenden noch einmal genauer anhand eines konkreten Ausführungsbeispiels erläutert. Bei den Ausführungsbeispielen stellen die beschriebenen Komponenten der Ausführungsformen und die beschriebenen Schritte der Verfahren jeweils einzelne, unabhängig voneinander zu betrachtende Merkmale dar, welche zumindest teilweise die Erfindung jeweils auch unabhängig voneinander weiterbilden.

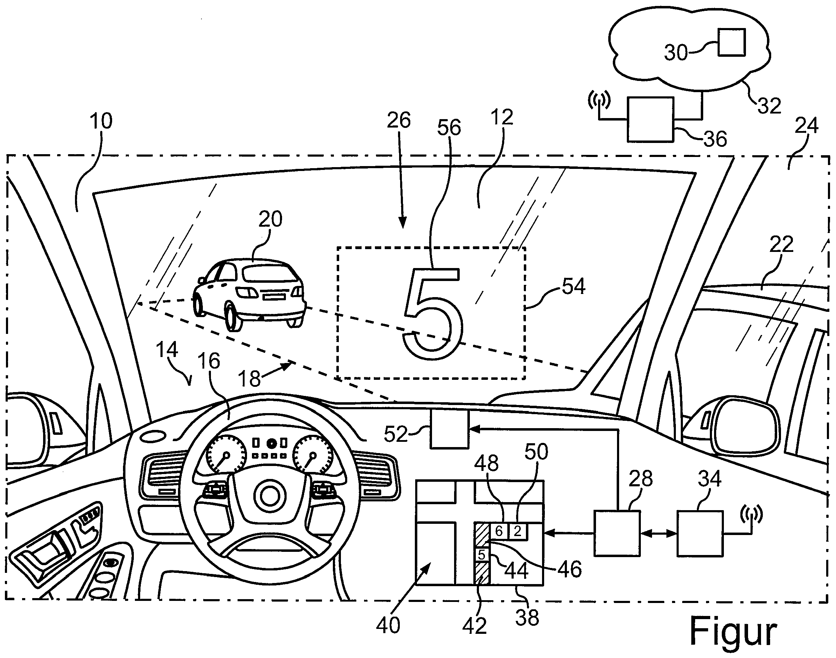

Die einzige Figur (Fig.) zeigt aus einer Perspektive eines Fahrers eines Kraftwagens 10 einen Blick durch eine Windschutzscheibe 12 auf eine Straße 14 vor dem Kraftwagen 10. Bei dem Kraftwagen 10 kann es sich beispielsweise um einen Personenkraftwagen handeln. Der Kraftwagen 10 stellt eine bevorzugte Ausführungsform des erfindungsgemäßen Kraftwagens dar. Von dem Fahrer sind in der Figur dessen Hände an einem Lenkrad 16 dargestellt. An einem Straßenrand 18 der Straße 14 parken mehrere Fahrzeuge 20, 22. Das Fahrzeug 22 ist teilweise durch ein Seitenfenster 24 des Kraftwagens 10 zu sehen. Zwischen den Fahrzeugen 20, 22 befindet sich am Straßenrand 18 eine Parklücke 26, welche einen möglichen Parkplatz für den Kraftwagen 10 darstellt.

Der Fahrer des Kraftwagens 10 ist auf der Suche nach einem Parkplatz und hat entsprechend einen Suchmodus in einer Navigationsvorrichtung 28 des Kraftwagens 10 aktiviert. Die Navigationsvorrichtung 28 hat daraufhin von einem Server 30 des Internets 32 Merkmalsdaten zu infrage kommenden Parkplätzen in der Umgebung der aktuellen Position des Kraftwagens 10 angefordert und von dem Server 30 empfangen. Die Kommunikationsverbindung zwischen der Navigationsvorrichtung 28 und dem Server 30 erfolgt über ein Mobilfunkmodul 34 des Kraftwagens 10. Bei dem Mobilfunkmodul 34 kann es sich beispielsweise um ein UMTS-Modul, ein LTE-Modul oder ein GSM-Modul handeln. Über das Kommunikationsmodul 34 tauscht die Navigationsvorrichtung 28 Kommunikationsdaten mit einem Mobilfunknetzwerk 36, das mit dem Internet 32 gekoppelt ist.

Bei dem Server 30 kann es sich um einen einzelnen Computer oder um eine Anordnung aus mehreren Computern handeln. Der Server 30 stellt eine Informationseinrichtung zum Speichern von Merkmalsdaten zu Parkplätzen dar. Die Navigationsvorrichtung 28 kann dazu ausgerichtet sein, auf einem Bildschirm 38 des Kraftwagens 10, beispielsweise einem Bildschirm eines Infotainmentsystems, eine Straßenkarte 40 anzuzeigen, auf welcher die möglichen Parkplätze, zu welchen Merkmalsdaten empfangen wurde, anzuzeigen. In dem gezeigten Beispiel sind auf der Straßenkarte 40 insgesamt 5 Parkplätze 42, 44, 46, 48, 50 markiert. Die Parklücke 26 entspricht dem Parkplatz 44. Über eine (nicht dargestellte) Lokalisationseinrichtung des Kraftwagens 10, beispielsweise einen Radarsensor oder einen Ultraschallsensor, kann durch die Navigationsvorrichtung 28 erkannt worden sein, dass die Parkplätze 42 und 46 von den Fahrzeugen 22 bzw. 20 belegt sind. Hinter einer Straßenecke, außerhalb des Sichtfelds des Fahrers, sind weitere Parkplätze 48, 50 vorhanden. Ob diese belegt sind, ist durch die Navigationsvorrichtung 28 allerdings nicht messbar. In dem vorliegenden Beispiel ist durch die Navigationsvorrichtung 28 in der Straßenkarte 40 zu jedem potenziell verfügbarem Parkplatz 44, 48, 50 eine solche Bewertung in Form einer Note angezeigt. Die Note kann entweder direkt vom Server 30 zu jedem Parkplatz 44, 48, 50 empfangen worden sein oder aus dem vom Server 30 empfangenen Merkmalsdaten durch die Navigationsvorrichtung 28 berechnet worden sein.

Die Navigationsvorrichtung 28 kann des Weiteren dazu ausgelegt sein, eine Head-Up-Display-Einheit 52 des Kraftwagens 10 anzusteuern. Durch die Steuersignale der Navigationsvorrichtung 28 wird durch die Head-Up-Display-Einheit 52 auf der Windschutzscheibe 12 die Parklücke 26 durch eine Markierung 54 kenntlich gemacht. Bei der Markierung 54 kann es sich beispielsweise um einen Rahmen handeln, welcher aus der Perspektive des Fahrers die Parklücke 26 umrahmt. Eine Farbe der Markierung 54 kann in Abhängigkeit von der Note des Parkplatzes festgelegt sein. Zusätzlich oder alternativ zu der Markierung 54 kann des Weiteren die Note als entsprechendes Symbol 56 durch die Head-Up-Display-Einheit 52 auf der Windschutzscheibe 12 angezeigt werden. In dem vorliegenden Beispiel ist die Note durch eine Zahl gebildet, wobei eine größere Zahl eine bessere Eignung des Parkplatzes zum Parken des Kraftwagens 10 angibt.

Durch das Anzeigen der Bewertung, hier also der Note, wird dem Fahrer des Kraftwagens 10 das Auffinden eines geeigneten Parkplatzes sehr erleichtert. Im Sommer kann er anhand der Bewertungen sehen, ob das Fahrzeug während der Parkzeit im Schatten stehen wird, so dass er die Klimaanlage nach seiner Rückkehr zu dem Kraftwagen 10 nicht extra einschalten muss, um den Kraftwagen 10 wieder herunterzukühlen. Im Winter zeigt ihm die Bewertung an, ob auf dem Parkplatz damit zu rechnen ist, dass sich während des Parkens Schnee auf der Frontscheibe 12 sammelt und dort vereist, so dass er am nächsten Morgen Eis kratzen müsste. Für die Bewertungen nutzt die Navigationsvorrichtung 28 bzw. der Server 30 Informationen zu Parkplätzen, die es mittels der Bewertung ermöglichen, eine Priorisierung bei der Parkplatzsuche vorzunehmen. Die Priorisierung kann auch durch den Kraftwagen 10 automatisiert vorgenommen werden, indem die Navigationsvorrichtung 28 den Fahrer unmittelbar zu dem geeignetsten Parkplatz leitet.

Die Bewertung nach Sonneneinstrahlung kann aufgrund von Merkmalsdaten zu den jeweiligen Parkplätzen ermöglicht werden, die mittels zuvor dort geparkten Fahrzeugen erfasst werden. Beispielsweise kann ein sogenanntes Datenlogging, also ein Mitschreiben von Messwerten, bei anderen Fahrzeugen vorgenommen werden und hierdurch ermittelt werden, welche Sonneneinstrahlung an den Parkplatz beispielsweise über Fotosensorik oder Temperatursensoren erfasst wird. Diese Daten werden dann als Merkmalsdaten an die Datenbank des Servers 30 übermittelt, wobei jeder Parkplatz eindeutig über Identifikationsnummer definiert werden kann. Auch ein Vereisungsgrad an einem Fahrzeug im Winter kann durch auf einem bestimmten Parkplatz zuvor geparkte Fahrzeuge ermittelt bzw. abgeschätzt werden. Eine Abschätzung ist beispielsweise durch eine Luftfeuchtigkeitsmessung kombiniert mit einer Temperaturmessung und der Aufnahme eines Kamerabildes sowie einer Zeitmessung zu der Zeit, die der Fahrer beim Kratzen benötigt, ermöglicht werden. Es ist aber auch möglich, solche Bewertungen (z. B. Sonneneinstrahlung und Vereisungsgrad) durch den Fahrer der jeweiligen Fahrzeuge selbst durchführen zu lassen. Dabei kann der Fahrer zur Weitergabe der Informationen aufgefordert werden, beispielsweise über sein Navigationsgerät oder sein Infotainmentsystem, oder er kann die Bewertung auch von sich aus selbständig abgeben. Weitere mögliche Parameter von Parkplätzen, die für die Bewertung herangezogen werden können, sind die Folgenden: Es kann die Tatsache berücksichtigt werden, ob ein Parkplatz überdacht ist oder nicht. Es kann auch erfasst werden, ob der Parkplatz sich in einer gut besuchten Straße befindet. Dies kann insofern günstig sein, als Diebe sich schwerer tun, wenn sie beobachtet werden. Ein Parkplatz in einer gut besuchten Straße ist dagegen eher unattraktiv, wenn es sich bei der Straße um eine sogenannte Party-Straße handelt, entlang welcher in der Regel angetrunkene Leute randalierend an den geparkten Fahrzeugen entlang gehen. Wenn nicht online geschaut werden kann, also beispielsweise über einen Internetbrowser im Internet, ob der Parkplatz frei ist, ist es eventuell von Vorteil zu wissen, ob an einem bestimmten Parkplatz zumindest oft oder weniger oft alles zugeparkt ist oder nicht. Auch die Verfügbarkeit eines Parkplatzes, d. h. eine Angabe, wie oft der Parkplatz belegt ist, kann deshalb ein Parameter für die Bewertung eines Parkplatzes sein. Eine mögliche Realisierung zum Erfassen der Verfügbarkeit besteht darin, Leerfahrten von Fahrzeugen durch deren Navigationsgeräte bei dem Server 30 melden zu lassen und daraus eine Häufigkeitsanalyse durchzuführen. Ein weiterer Parameter besteht in einem geschätzten Fußweg zu einem eigentlichen Ziel einer Reise, falls dies in ein Navigationsgerät eines Kraftwagens eingegeben wird bzw. von einem Fahrzeug automatisch erkannt wird, wie dies beispielsweise bei einer Heimfahrt der Fall sein kann.

Die Merkmalsdaten der einzelnen Fahrzeuge, die dann einen oder mehrere der genannten Parameter oder auch weitere Parameter umfassen können, können mit der Information verknüpft werden, wann wahrscheinlich wieder vom Parkplatz weggefahren wird, also wann der Fahrer den Kraftwagen 10 wieder wegfahren möchte. Hierdurch ergeben sich weitere Möglichkeiten, die Parkplätze zu bewerten. So ist z. B. die Sonneneinstrahlung nicht mehr so entscheidend, wenn erst abends wieder weggefahren wird. Falls nur kurz geparkt wird, um beispielsweise ein Geschäft aufzusuchen und dort eine Ware einzukaufen, ist beispielsweise der Vereisungsgrad im Winter kein entscheidender Parameter für die Bewertung. Auch die Wetterinformationen können eine entscheidende Rolle spielen, falls nach den Kriterien Sonneneinstrahlung/Vereisungsgrad priorisiert werden soll. Anhand der Merkmalsdaten können die Parkplätze dann entsprechend priorisiert werden, d. h. eine Rangordnung dafür aufgestellt werden, welcher Parkplatz am geeignetsten bzw. weniger geeignet zum Abstellen des Kraftwagens 10 ist. Die Parameter, welcher von jedem Parkplatz bekannt sind, können hierbei auch unterschiedlich gewichtet werden, was beispielsweise durch den Fahrer an der Navigationsvorrichtung 28 vorgegeben werden kann. Beispielsweise kann der Fahrer folgende Gewichtung vorgeben: Sonneneinstrahlung: sehr wichtig, Vereisung: nicht so wichtig (da beispielsweise eine Standheizung in den Kraftwagen 10 eingebaut sein kann), randalierte Fahrzeuge: sehr wichtig. Diese letztere Information kann beispielsweise über eine weitere Datenbank, etwa der Polizei aus dem Internet ermittelt werden, um so aus der Datenbank zu erfahren, ob an dem Ort des Parkplatzes öfter Beschädigungen an Fahrzeugen gemeldet worden sind.

Aus den Vorgaben für die Gewichtung können dann die Parkplätze ausgewählt werden. Es können z. B. die beschriebenen Noten für die Parkplätze direkt in der Windschutzscheibe 12 eingeblendet werden. Der Fahrer kann dann entscheiden, auf welchem Parkplatz er den Kraftwagen 10 parken möchte. Anstelle der Noten kann dem Fahrer beispielsweise auch angezeigt werden, wie lange er im Winter nach dem Abstellen des Kraftwagens über Nacht in der Früh einplanen muss, um sein Fahrzeug im Winter wieder von Eis zu befreien.

Durch die Beispiele ist gezeigt, wie durch Ermitteln von Informationen zu einzelnen Parkplätzen für einen Fahrer der Komfort bei der Benutzung eines Kraftwagens gesteigert werden kann. Zudem ergeben sich Vorteile durch einen niedrigeren Kraftstoffverbrauch, weil beispielsweise Standheizungszeiten minimiert werden können oder der Kühlungsaufwand reduziert werden kann.

## Patentansprüche

1. Verfahren zum Bereitstellen von Informationen über einen Parkplatz (26, 44, 46, 48, 50), mit den Schritten:
- durch eine Erfassungseinrichtung Erfassen von Merkmalsdaten des Parkplatzes (26, 44, 46, 48, 50);
- Speichern der Merkmalsdaten durch eine fahrzeugexterne Informationseinrichtung (30);
- Übertragen der Merkmalsdaten durch die Informationseinrichtung (30) an eine Navigationsvorrichtung (28), mittels welcher ein Fahrer eines zweiten Fahrzeugs (10) einen Parkplatz für das zweite Fahrzeug (10) sucht,
**dadurch gekennzeichnet, dass**
a) durch die Erfassungseinrichtung als zumindest ein Teil der Merkmalsdaten von einem Fahrer eines ersten Fahrzeugs, das auf dem Parkplatz geparkt hat, mittels einer Eingabevorrichtung Eingabedaten mit einer Bewertung des Parkplatzes (26, 44, 46, 48, 50) empfangen werden, wobei die durch die Erfassungseinrichtung erfassten Merkmalsdaten des Parkplatzes (26, 44, 46, 48, 50) einen Umwelteinfluss beschreiben, der auf das erste, auf dem Parkplatz geparkte Fahrzeug eingewirkt hat, wobei als der Umwelteinfluss eine Sonneneinstrahlung auf das erste Fahrzeug und/oder ein Vereisungsgrad einer Außenfläche des ersten Fahrzeugs beschrieben wird und wobei die Merkmalsdaten zusätzlich eine Zeitangabe umfassen, wann der Umwelteinfluss auf das erste Fahrzeug einwirkte, und
b) durch die Navigationsvorrichtung (28) vom Fahrer des zweiten Fahrzeugs (10) eine Eingabe mit Zeitangabedaten empfangen wird, durch welche angegeben ist, für welchen Zeitraum das zweite Fahrzeug (10) auf dem Parkplatz voraussichtlich geparkt wird, und
c) durch die Navigationsvorrichtung (28) geprüft wird, welche Merkmalsdaten für den Fahrer des zweiten Fahrzeugs (10) relevant sind, wobei die Tatsache, ob bestimmte Merkmalsdaten für den Fahrer des zweiten Fahrzeugs (10) relevant sind, davon abhängig ist, wann der Fahrer das zweite Fahrzeug (10) auf dem Parkplatz abstellen möchte, und hierdurch auf Grundlage der Zeitangabedaten gezielt aussagekräftige Merkmalsdaten zu den in Frage kommenden Parkplätzen zusammengestellt werden.

2. Verfahren nach Anspruch 1, wobei die Zeitangabe eine Jahreszeit und/oder eine Tageszeit umfasst.

3. Verfahren nach einem der vorhergehenden Ansprüche, wobei durch die Erfassungseinrichtung die Merkmalsdaten durch zumindest eine der folgenden Einrichtungen des ersten Fahrzeugs ermittelt wird: eine Fotosensorik, ein Thermometer, eine Luftfeuchtigkeitsmesseinrichtung, eine Kamera, eine Navigationseinrichtung, die Leerfahrten bei einer Parkplatzsuche erfasst, eine Beobachtungseinrichtung zum Messen der Zeit, die ein Fahrer des ersten Fahrzeugs zum Vorbereiten einer Fahrt nach dem Parken auf dem Parkplatz benötigte, insbesondere zum Eiskratzen oder Lüften.

4. Verfahren nach einem der vorhergehenden Ansprüche, wobei durch die Erfassungseinrichtung als zumindest ein Teil der Merkmalsdaten von einer Datenbank historische Daten über Ereignisse betreffend Vandalismus und/oder von einer Datenbank Veranstaltungsdaten über bevorstehende Veranstaltungen in einem vorbestimmten Umkreis um den Parkplatz (26, 44, 46, 48, 50) empfangen werden.

5. Verfahren nach einem der vorhergehenden Ansprüche, wobei durch die Informationseinrichtung die Merkmalsdaten des Parkplatzes (26, 44, 46, 48, 50) in einer Datenbank unter einer Identifikationsnummer des Parkplatzes (26, 44, 46, 48, 50) abgespeichert werden.

6. Verfahren nach einem der vorhergehenden Ansprüche, wobei durch die Informationseinrichtung (30) zu mehreren Parkplätzen (26, 44, 46, 48, 50) jeweilige Merkmalsdaten gespeichert werden und die Navigationsvorrichtung (28) zu jedem Parkplatz (26, 44, 46, 48, 50) eine Bewertung dazu ermittelt wird, wie gut der jeweilige Parkplatz (26, 44, 46, 48, 50) zum Parken des zweiten Fahrzeugs (10) geeignet ist.

7. Verfahren nach Anspruch 6, wobei die Merkmalsdaten jedes Parkplatzes (26, 44, 46, 48, 50) jeweils mehrere Parameter des Parkplatzes (26, 44, 46, 48, 50) umfassen und durch die Navigationsvorrichtung (28) zum Ermitteln der Bewertung jedes Parkplatzes (26, 44, 46, 48, 50) jeweils die Parameter mit einer für jeden Parameter einstellbaren Gewichtung beaufschlagt werden und die gewichteten Parameter zu der Bewertung des jeweiligen Parkplatzes (26, 44, 46, 48, 50) kombiniert werden.

8. Verfahren nach Anspruch 6 oder 7, wobei zumindest eine Bewertung durch die Navigationsvorrichtung (28) in Abhängigkeit von Wetterdaten und/oder einer Jahreszeit und/oder einer Außentemperatur und/oder einer Ausstattung des zweiten Fahrzeugs ermittelt wird.

9. Verfahren nach einem der Ansprüche 6 bis 8, wobei die Navigationsvorrichtung (28) dem Fahrer des zweiten Fahrzeugs (10) zu jedem Parkplatz (26, 44, 46, 48, 50) die Bewertung anzeigt, wobei die Anzeige bevorzugt durch die Navigationsvorrichtung (28) des zweiten Fahrzeugs (10) in einer Straßenkarte (40) und/oder durch eine Projektionsvorrichtung (52) über ein Fensterscheibe (12) des zweiten Fahrzeugs (10) erfolgt.

10. Verfahren nach einem der vorhergehenden Ansprüche, wobei durch die Navigationsvorrichtung (28) in einer vorbestimmten Umgebung um einen vorgegebenen Navigationszielort auf der Grundlage der von der Informationseinrichtung empfangenen Merkmalsdaten ein Parkplatz (26, 44, 46, 48, 50) ausgewählt wird und eine Navigationsroute zu dem ausgewählten Parkplatz (26, 44, 46, 48, 50) ermittelt wird.

11. Verfahren nach Anspruch 10, wobei durch die Navigationsvorrichtung (28) von einem Benutzer eine Eingabe empfangen wird, welche ein Mindestanforderungskriterium umfasst, das ein Parkplatz erfüllen muss, um bei der Auswahl berücksichtigt zu werden.

12. Navigationsvorrichtung (28), die dazu ausgelegt ist, von einer Informationseinrichtung (30) Merkmalsdaten zu mehreren Parkplätzen zu empfangen und
a) zu jedem Parkplatz (26, 44, 46, 48, 50) die Merkmalsdaten und/oder eine daraus abgeleitete Bewertung des Parkplatzes (26, 44, 46, 48, 50) mittels einer Projektionsvorrichtung (52) über eine Fensterscheibe (12) eines Kraftwagens (10) anzuzeigen
**dadurch gekennzeichnet, dass**
- die Merkmalsdaten einen Umwelteinfluss in Form einer Sonneneinstrahlung auf ein erstes Fahrzeug und/oder eines Vereisungsgrades einer Außenfläche des ersten Fahrzeugs beschreiben, wobei die Merkmalsdaten zusätzlich eine Zeitangabe umfassen, wann der Umwelteinfluss auf das erste Fahrzeug einwirkte, und
- die Navigationsvorrichtung (28) dazu ausgelegt ist, vom Fahrer des Kraftwagens (10) eine Eingabe mit Zeitangabedaten zu empfangen durch welche angegeben ist, für welchen Zeitraum der Kraftwagen (10) auf dem Parkplatz voraussichtlich geparkt wird, und zu überprüfen, welche Merkmalsdaten für den Fahrer des Kraftwagens (10) relevant sind, wobei die Tatsache, ob bestimmte Merkmalsdaten für den Fahrer des zweiten Fahrzeugs (10) relevant sind, davon abhängig ist, wann der Fahrer das zweite Fahrzeug (10) auf dem Parkplatz abstellen möchte, und hierdurch auf Grundlage der Zeitangabedaten gezielt aussagekräftige Merkmalsdaten zu den in Frage kommenden Parkplätzen zusammenzustellen.

13. Kraftwagen (10) mit einer Navigationsvorrichtung (28) gemäß Anspruch 12.

## Claims

1. Method for providing information about a parking space (26, 44, 46, 48, 50), comprising the steps of:
- capturing, by a capture device, feature data for the parking space (26, 44, 46, 48, 50);
- storing, by a vehicle-external information device (30), the feature data;
- transmitting the feature data from the information device (30) to a navigation device (28) which is used by a driver of a second vehicle (10) to look for a parking space for the second vehicle (10),
**characterised in that**
a) input data with an evaluation of the parking space (26, 44, 46, 48, 50) are received, by the capture device by means of an input device, at least as part of the feature data from a driver of a first vehicle parked in the parking space, wherein the feature data of the parking space (26, 44, 46, 48, 50) captured by the capture device describe an environmental influence to which the first vehicle parked in the parking space was exposed, the environmental influence being insolation on the first vehicle and/or a degree of icing on an exterior surface of the first vehicle, and wherein the feature data further include a time statement concerning when the first vehicle was exposed to the environmental influence, and
b) a time statement input is received by the driver of the second vehicle (10) by means of the navigation device (28) indicating for which period of time the second vehicle (10) will probably be parked in the parking space, and
c) it is checked, by the navigation device (28), which feature data are relevant to the driver of the second vehicle (10), the feature data being checked for relevance to the driver of the second vehicle (10) based on when the driver wishes to park the second vehicle (10) in the parking space, and, using the time statement input data, significant feature data are systematically compiled for the potential parking spaces.

2. Method according to claim 1, wherein the time statement comprises a season and/or a time of day.

3. Method according to any of the preceding claims, wherein the feature data are captured, by the capture device, by means of at least one of the following devices of the first vehicle: a photosensor system, a thermometer, a humidity measuring device, a camera, a navigation device which records empty runs when looking for a parking space, an observation device for measuring how much time was required for a driver of the first vehicle to prepare for a journey after being parked in the parking space, in particular for de-icing or airing.

4. Method according to any of the preceding claims, wherein the capture device receives from a database as at least part of the feature data historical data about events relating to vandalism, and/or receives from a database event data relating to imminent events within a predetermined radius of the parking space (26, 44, 46, 48, 50).

5. Method according to any of the preceding claims, wherein the information device stores the feature data of the parking space (26, 44, 46, 48, 50) in a database under an identification number for the parking space (26, 44, 46, 48, 50).

6. Method according to any of the preceding claims, wherein the information device (30) stores respective feature data for a plurality of parking spaces (26, 44, 46, 48, 50), and the navigation device (28) ascertains a rating for each parking space (26, 44, 46, 48, 50) of how well suited the respective parking space (26, 44, 46, 48, 50) is for parking the second vehicle (10).

7. Method according to claim 6, wherein the feature data of each parking space (26, 44, 46, 48, 50) comprise a plurality of parameters for the parking space (26, 44, 46, 48, 50), and a weighting adjustable for each parameter is applied to the parameters by the navigation device (28) for ascertaining the rating for each parking space (26, 44, 46, 48, 50), and the weighted parameters are combined to ascertain the rating for each parking space (26, 44, 46, 48, 50).

8. Method according to claim 6 or 7, wherein at least one rating is ascertained by the navigation device (28) based on weather data and/or a season and/or an outside temperature and/or a level of equipment of the second vehicle.

9. Method according to any of claims 6 to 8, wherein the navigation device (28) displays the rating for each parking space (26, 44, 46, 48, 50) to the driver of the second vehicle (10), wherein the navigation device (28) of the second vehicle (10) preferably displays the rating using a road map (40) and/or a projection device (52) projecting an image on a windowpane (12) of the second vehicle (10).

10. Method according to any of the preceding claims, wherein the navigation device (28) selects a parking space (26, 44, 46, 48, 50) in a predetermined environment around a predetermined navigation destination based on the feature data received from the information device, and a navigation route to the selected parking space (26, 44, 46, 48, 50) is determined.

11. Method according to claim 10, wherein the navigation device (28) receives an input from a user comprising a minimum requirement criterion that a parking space has to satisfy in order to be considered during selection.

12. Navigation device (28) configured to receive feature data for a plurality of parking spaces from an information device (30), and
a) to display for each parking space (26, 44, 46, 48, 50) the feature data and/or a rating for the parking space (26, 44, 46, 48, 50) derived from the feature data by means of a projection device (52), the display being produced on a windowpane (12) of a motor vehicle (10),
**characterised in that**
- the feature data describe an environmental influence in the form of an insolation on a first vehicle and/or a degree of icing on an exterior surface of the first vehicle, wherein the feature data additionally comprise a time statement concerning when the first vehicle was exposed to the environmental influence, and
- the navigation device (28) is configured to receive from the driver of the motor vehicle (10) an input with time data indicating for which period of time the motor vehicle (10) will probably be parked in the parking space, and to check which feature data are relevant to the driver of the motor vehicle (10), the feature data being checked for relevance to the driver of the second vehicle (10) based on when the driver wishes to park the second vehicle (10) in the parking space, and, using the time statement input data, significant feature data are systematically compiled for the potential parking spaces.

13. Motor vehicle (10) with a navigation device (28) according to claim 12.

## Revendications

1. Procédé destiné à fournir des informations sur une place de stationnement (26, 44, 46, 48, 50), avec les étapes :
- par un dispositif de détection, détection de données caractéristiques de la place de stationnement (26, 44, 46, 48, 50) ;
- mémorisation des données caractéristiques par un dispositif d'information (30) externe au véhicule ;
- transmission des données caractéristiques par le dispositif d'information (30) à un dispositif de navigation (28) au moyen duquel un conducteur d'un deuxième véhicule automobile (10) cherche une place de stationnement pour le deuxième véhicule (10),
**caractérisé en ce que**
a) par le dispositif de détection, en tant qu'au moins une partie des données caractéristiques en provenance d'un conducteur d'un premier véhicule qui a stationné sur la place de stationnement, des données d'entrée avec une évaluation de la place de stationnement (26, 44, 46, 48, 50) sont reçues au moyen d'un dispositif d'entrée,
les données caractéristiques de la place de stationnement (26, 44, 46, 48, 50) qui ont été détectées par le dispositif de détection décrivant alors une influence de l'environnement qui a agi sur le premier véhicule stationné sur la place de stationnement,
un rayonnement solaire sur le premier véhicule et/ou un degré de givrage d'une surface extérieure du premier véhicule étant décrits en tant qu'influence de l'environnement
et les données caractéristiques comprenant en plus une indication temporelle qui précise quand l'influence de l'environnement a agi sur le premier véhicule, et
b) par le dispositif de navigation (28), une entrée avec des données d'indication temporelle est reçue du conducteur du deuxième véhicule (10), lesquelles données d'indication temporelle indiquent pendant quel intervalle de temps le deuxième véhicule (10) a prévu de stationner sur la place de stationnement, et
c) par le dispositif de navigation (28), on teste quelles données caractéristiques sont pertinentes pour le conducteur du deuxième véhicule (10),
le fait que certaines données caractéristiques sont pertinentes ou non pour le conducteur du deuxième véhicule (10) dépendant alors du moment auquel le conducteur souhaite laisser le deuxième véhicule (10) sur la place de stationnement et des données caractéristiques pertinentes et ciblées qui concernent les places de stationnement envisagées étant alors réunies sur la base des données d'indication temporelle.

2. Procédé selon la revendication 1, dans lequel l'indication temporelle comprend une période de l'année et/ou une période de la journée.

3. Procédé selon l'une des revendications précédentes, dans lequel, par le dispositif de détection, les données caractéristiques sont déterminées par au moins l'un des appareils suivants du premier véhicule : capteur photoélectrique, thermomètre, appareil de mesure de l'humidité de l'air, caméra, appareil de navigation qui détecte des parcours à vide lors d'une recherche de place de stationnement, appareil d'observation destiné à mesurer le temps qui a été nécessaire à un conducteur du premier véhicule pour préparer un parcours après le stationnement sur la place de stationnement, en particulier pour gratter le givre ou pour aérer.

4. Procédé selon l'une des revendications précédentes, dans lequel, par le dispositif de détection, en tant qu'au moins une partie des données caractéristiques, des données historiques sur des événements concernant le vandalisme sont reçues en provenance d'une base de données et des données d'événements sur des événements devant se produire dans un environnement prédéterminé autour de la place de stationnement (26, 44, 46, 48, 50) sont reçues en provenance d'une base de données.

5. Procédé selon l'une des revendications précédentes, dans lequel, par le dispositif d'information, les données caractéristiques de la place de stationnement (26, 44, 46, 48, 50) sont mémorisées dans une base de données sous un numéro d'identification de la place de stationnement (26, 44, 46, 48, 50).

6. Procédé selon l'une des revendications précédentes, dans lequel, par le dispositif d'information (30), des données caractéristiques respectives sont mémorisées pour plusieurs places de stationnement (26, 44, 46, 48, 50) et le dispositif de navigation (28) réalise pour chaque place de stationnement (26, 44, 46, 48, 50) une évaluation pour savoir dans quelle mesure la place de stationnement (26, 44, 46, 48, 50) respective convient au stationnement du deuxième véhicule (10).

7. Procédé selon la revendication 6, dans lequel les données caractéristiques de chaque place de stationnement (26, 44, 46, 48, 50) comprennent à chaque fois plusieurs paramètres de la place de stationnement (26, 44, 46, 48, 50) et, par le dispositif de navigation (28), en vue de déterminer l'évaluation de chaque place de stationnement (26, 44, 46, 48, 50), les paramètres sont affectés à chaque fois d'une pondération réglable pour chaque paramètre et les paramètres pondérés sont combinés pour l'évaluation de la place de stationnement (26, 44, 46, 48, 50) respective.

8. Procédé selon la revendication 6 ou 7, dans lequel au moins une évaluation est déterminée par le dispositif de navigation (28) en fonction de données météorologiques et/ou d'une saison et/ou d'une température extérieure et/ou d'un équipement du deuxième véhicule.

9. Procédé selon l'une des revendications 6 à 8, dans lequel le dispositif de navigation (28) indique au conducteur du deuxième véhicule (10) l'évaluation de chaque place de stationnement (26, 44, 46, 48, 50), l'indication étant effectuée de préférence par le dispositif de navigation (28) du deuxième véhicule (10) dans une carte routière (40) et/ou par un dispositif de projection (52) par l'intermédiaire d'un pare-brise (12) du deuxième véhicule (10).

10. Procédé selon l'une des revendications précédentes, dans lequel, par le dispositif de navigation (28), une place de stationnement (26, 44, 46, 48, 50) dans un environnement prédéterminé autour d'un lieu de destination de navigation prédéterminé est choisie sur la base des données caractéristiques reçues du dispositif d'information et un itinéraire de navigation vers la place de stationnement (26, 44, 46, 48, 50) choisie est déterminé.

11. Procédé selon la revendication 10, dans lequel, par le dispositif de navigation (28), une entrée est reçue d'un utilisateur, entrée qui comprend un critère d'exigence minimale qui doit être satisfait par une place de stationnement pour que celle-ci soit prise en compte lors du choix.

12. Dispositif de navigation (28) qui est conçu pour recevoir d'un dispositif d'information (30) des données caractéristiques sur plusieurs places de stationnement et
a) pour chaque place de stationnement (26, 44, 46, 48, 50), pour indiquer les données caractéristiques et/ou une évaluation, déduite de celles-ci, de la place de stationnement (26, 44, 46, 48, 50) au moyen d'un dispositif de projection (52) par l'intermédiaire du pare-brise (12) d'un véhicule (10),
**caractérisé en ce que**
- les données caractéristiques décrivent une influence de l'environnement sous la forme d'un rayonnement solaire sur un premier véhicule et/ou un degré de givrage d'une surface extérieure du premier véhicule, les données caractéristiques comprenant en plus une indication temporelle précisant quand l'influence de l'environnement a agi sur le premier véhicule, et
- le dispositif de navigation (28) est conçu pour recevoir du conducteur du véhicule (10) une entrée avec des données d'indication temporelle qui indiquent pendant quel intervalle de temps le deuxième véhicule (10) a prévu de stationner sur la place de stationnement et pour vérifier quelles données caractéristiques sont pertinentes pour le conducteur du véhicule (10), le fait que certaines données caractéristiques sont pertinentes ou non pour le conducteur du deuxième véhicule (10) dépendant alors du moment auquel le conducteur souhaite laisser le deuxième véhicule (10) sur la place de stationnement et des données caractéristiques pertinentes et ciblées qui concernent les places de stationnement envisagées étant alors réunies sur la base des données d'indication temporelle.

13. Véhicule automobile (10) avec un dispositif de navigation (28) selon la revendication 12.
